# EUROPÄISCHE PATENTSCHRIFT

(11) **EP 2 866 623 B1**
(45) Veröffentlichungstag und Bekanntmachung des Hinweises auf die Patenterteilung: **08.08.2018**
(21) Anmeldenummer: 13729335.3
(22) Anmeldetag: 17.06.2013
(51) Int. Cl.: A47J 37/07

(54) **GRILL**
GRILL
GRIL

(30) Priorität: 27.06.2012 CH 9012012; 16.08.2012 CH 13722012
(43) Veröffentlichungstag der Anmeldung: 06.05.2015
(73) Patentinhaber: Sommerliving AG, 6052 Hergiswil NW (CH)
(72) Erfinder: BUCHER, Armin, CH-6052 Hergiswil NW (CH); MATHIS, Marc, CH-6045 Meggen (CH)
(74) Vertreter: Schneider Feldmann AG Patent- und Markenanwälte
(86) Internationale Anmeldenummer: PCT/EP2013/062485
(87) Internationale Veröffentlichungsnummer: WO 2014/001115

(56) Entgegenhaltungen:
- US-A- 5 649 477
- US-A1- 2007 119 444
- US-A1- 2009 239 187
- US-A1- 2011 252 977

## Beschreibung

Die vorliegende Erfindung betrifft eine schliessbare Grillvorrichtung umfassend einen Unterteil und einen darin angeordneten, ringförmigen Gasbrenner und einen im Unterteil oberhalb des Gasbrenners und distanziert von der Wand des Unterteiles gehaltenen Wärmeleitkonus mit einer zentrischen unteren Öffnung, welche kleiner ist als der innere Durchmesser des ringförmigen Gasbrenners, sowie eine im Unterteil über dem Wärmeleitkonus gehaltenen Grillrost, sowie einen schwenkbaren oder abhebbaren Deckel.

Grillvorrichtungen dieser Art sind aus der EP 0653917 und auf dem Markt insbesondere als sogenannte Kugelgrills bekannt und sehr verbreitet. Die im Betreff beschriebenen Grillvorrichtungen entsprechen diesen bekannten Kugelgrillvorrichtungen. Wie der Name sagt, haben diese Grillvorrichtungen eine in etwa kugelige Aussenform. Der Unterteil ist in etwa eine Halbkugel, während der Deckel zwar gewölbt, aber nicht halbkugelig ist.

Das Konzept des Kugelgrills geht davon aus, dass die Wärme, die von einem ringförmigen Gasbrenner erzeugt wird und dessen Innendurchmesser grösser ist als eine zentrische Öffnung in einem im Unterteil gehaltenen Leitkonus eine etwa gleichmässige Wärmeverteilung erzeugt. Die Wärme strömt vorwiegend um den Leitkonus herum und steigt so aussen der Wandung des Leitkonuses und innen der Wandung des Unterteils entlang bis auf den Deckel, so, dass das Gargut vorwiegend Oberhitze erhält. Da aber der Leitkonus vom ringförmigen Gasbrenner ebenfalls erhitzt wird, wird auch eine genügende Unterwärme erzeugt, die zum Garen des Grillgutes normalerweise ausreicht. Trotzdem ist es aber erwünscht, um die Wärme einmal mehr von oben und das andere Mal mehr von unten zuzuführen, ähnlich einem Backofen, um Oberhitze oder Unterhitze zu erzeugen.

Aus der EP-688177 A ist eine Grillvorrichtung bekannt, die als offene oder geschlossene Grillvorrichtung gestaltet sein kann und bei dem im Unterteil zentrisch ein Brenner angeordnet ist, und zudem Wärmeleitmittel vorgesehen sind, die eine unterschiedliche Wärmeführung ermöglichen, nämlich entweder eine gleichmässige durch eine sich erhitzende Platte erzeugte Strahlungswärme oder durch das Anheben von Teilen dieser Platte und dadurch sich bildende Öffnungen eine Konvektionswärmeverteilung, die je nach Einstellung mehr zentrisch oder mehr radial die Wärme nach oben führen lässt.

Zwar sind auch andere offene bzw. geschlossene Grillvorrichtungen bekannt, die eine gewisse Wärmeführung zulassen wie beispielsweise die DE 19515080 A oder die DE 9411524 U zeigen. Diese Grillvorrichtungen sind aber vom Aufbau her völlig anders, auch wenn auch hier ringförmige Brennervorrichtungen vorgesehen sind, wobei es sich hierbei nicht um Gasbrenner handelt.

Grillvorrichtungen mit Gasbrenner der eingangs genannten Art neigen dazu, wie bereits erwähnt, mehrheitlich Oberhitze zu erzeugen und entsprechend öffnen die Benutzer den Deckel und wenden von Zeit zu Zeit das zu grillende Gargut, um eine gleichmässige Bräunung zu erzielen. Hierdurch geht unnötig viel Energie verloren und die ständige Wenderei des Gargutes führt auch zu einer grösseren Verschmutzung der Grillvorrichtung.

Aus der US 5 649 477 A ist ein Grill mit zwei übereinander angeordneten Koni bekannt, wobei der obere Konus umkehrbar anbringbar ist, so dass die weite Öffnung des Konus zum Gasbrenner hin gerichtet ist und die engere Öffnung der Wärme zum Deckel hin gerichtet ist. Je nach Ausrichtung des oberen Konus wird entweder mehr Oberhitze oder mehr Unterhitze erzielbar. Während des Gebrauchs ist die Wärmeführung jedoch unveränderbar.

Es ist daher die Aufgabe der vorliegenden Erfindung, eine Grillvorrichtung der eingangs genannten Art so zu gestalten, dass dem Gargut während des Betriebs abwechslungsweise vermehrt Oberhitze oder vermehrt Unterhitze zuführbar ist.

In einer besonders bevorzugten Ausführungsform ist die Grillvorrichtung gemäss dem Anspruch 1 gestaltet.

Weitere vorteilhafte Ausgestaltungsformen des Erfindungsgegenstandes gehen aus den abhängigen Patentansprüchen hervor und deren Bedeutung und Wirkungsweise ist in der nachfolgenden Beschreibung mit Bezug auf die anliegenden Zeichnungen erläutert. In der Zeichnung ist ein bevorzugtes Ausführungsbeispiel des Erfindungsgegenstandes dargestellt. Es zeigt:
- Fig. 1: eine schliessbare Grillvorrichtung mit aufgeklapptem Deckel in einem mobilen Untersatz angeordnet in einer Seitenansicht und
- Fig. 2: dieselbe Grillvorrichtung mit mobilem Untersatz in rückseitiger Ansicht, während
- Fig. 3: dieselbe Grillvorrichtung mit Untersatz in einer perspektivischen Ansicht zeigt. In
- Fig. 4: ist die Grillvorrichtung unter Weglassung des mobilen Untersatzes und ohne den Deckel dargestellt, wobei der Unterteil der Grillvorrichtung in einem Diametralschnitt und die weiteren Teile der Grillvorrichtung in Ansicht dargestellt sind.
- Fig. 5: zeigt den Wärmeleitkonus in einer Seitenansicht und
- Fig. 6: in perspektivischer Darstellung. Ebenso ist in
- Fig. 7: der Verstellkonus in Seitenansicht und in
- Fig. 8: in perspektivischer Darstellung gezeigt.
- Fig. 9: zeigt eine alternative Gestaltung des Wärmeleitkonus in der Seitenansicht und
- Fig. 10: in der Ansicht von oben, während
- Fig. 11: zum Wärmeleitkonus der Fig. 9 und 10 passend einen alternativen Verstellkonus in der Seiten- und
- Fig. 12: in der Ansicht von oben dargestellt.

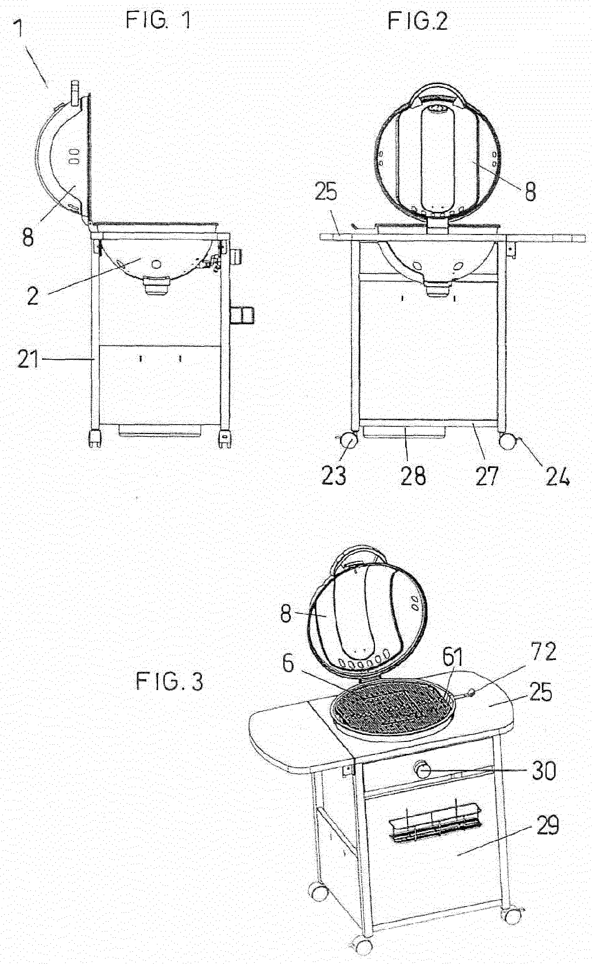

Die eigentliche Grillvorrichtung ist mit 1 bezeichnet. Es handelt sich hierbei um eine schliessbare Grillvorrichtung bestehend aus einem Unterteil 2 und einem Deckel 8 der hier im vollständig aufgeklappten Zustand dargestellt ist. Mittels des Deckels läst sich die Grillvorrichtung 1 vollständig schliessen und entsprechend wird hier die Grillvorrichtung als schliessbare Grillvorrichtung bezeichnet. Die Grillvorrichtung 1 ist in den Figuren 1 bis 3 auf einen mobilen Untersatz gelagert dargestellt. Der mobile Untersatz besteht aus einer Rahmenkonstruktion 21 mit 4 Beinen und daran befestigten, schwenkbaren Rollen 23, die beispielsweise mit Arretiermittel 24 versehen sein können. Der mobile Untersatz 20 ist mit einer hitzebeständigen Auflage 25 abgedeckt, mit einer kreisförmigen Aufnahmeöffnung in den der Unterteil der Grillvorrichtung 1 lagert. Unter dem Unterteil 2 der Grillvorrichtung 1 verbleibt ein relativ grosser Raum mit einem Boden 27 und einer vertieften Wanne 28, in der ein hier nicht dargestellter Gasbehälter stehen kann. Mit 29 ist die Frontabdeckung bezeichnet aus der ein Regulierknopf 30 ragt, mit dem die Gaszuführung zum Gasbrenner verstellbar ist.

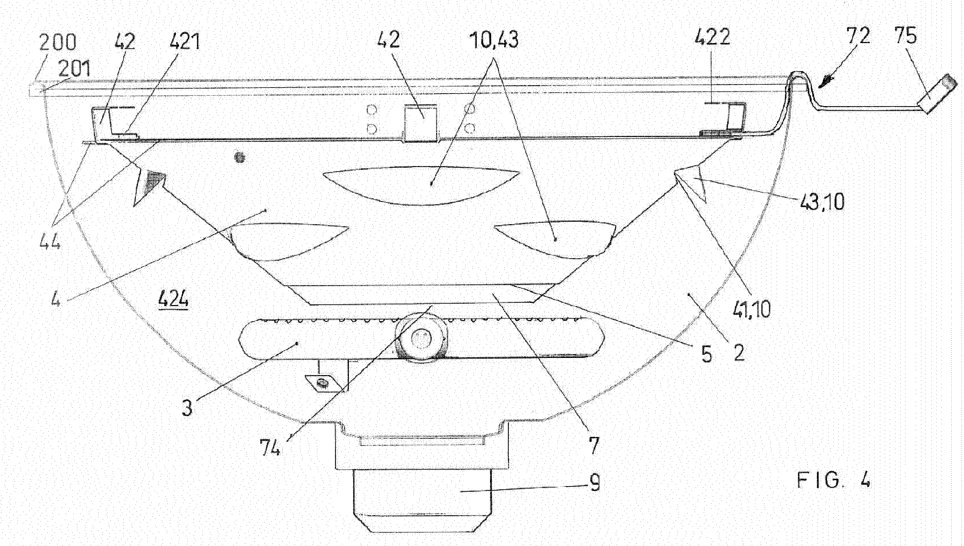

In der Figur 3 in der man in perspektivischer Ansicht, schräg von oben, die Grillvorrichtung mit dem mobilen Untersatz sieht, erkennt man auch den Rost 6, der in den Figuren 1 und 2 nicht sichtbar ist und in der Figur 4 weggelassen wurde, um die Zeichnung nicht unnötig zu belasten.

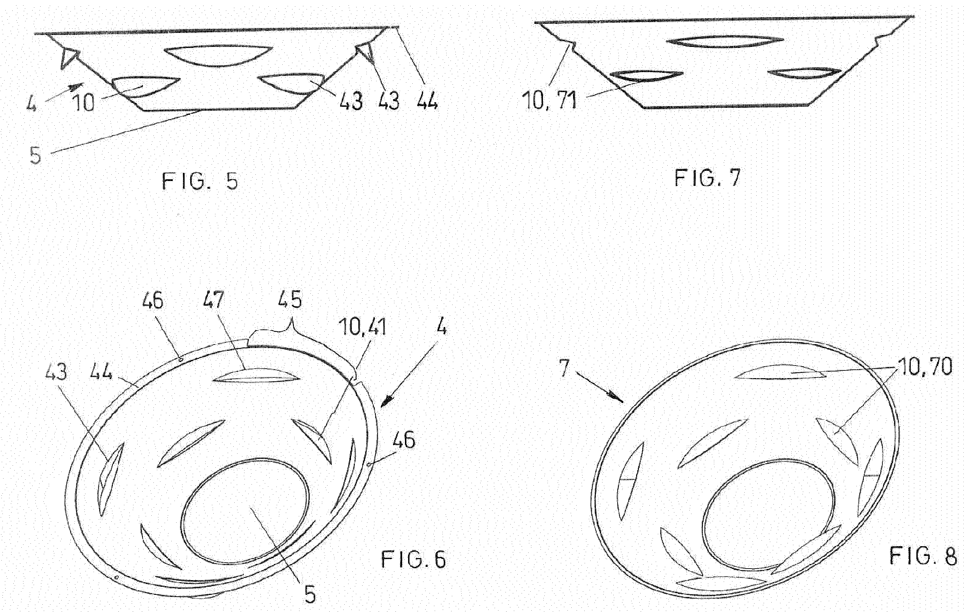

In der Figur 4 ist von der Grillvorrichtung nur der Unterteil im Schnitt und die darin befindlichen Teile in Ansicht dargestellt. Der Unterteil 2 hat eine halbkugelförmige Gestalt und der obere Rand 200 besitzt eine Umstülpung 201. Im Unterteil 2 ist der Wärmeleitkonus 4 in der Seitenansicht dargestellt. Darunter befindet sich ein ringförmiger Gasbrenner 3. Der Leitkonus 4 besitzt eine untere zentrische Öffnung 5, dessen Durchmesser kleiner ist als der innere Durchmessers des ringförmigen Gasbrenners 3. Der Wärmeleitkonus 4, der an seinem oberen Rand anschliesst weist an der weiten Öffnung einen horizontalen Kragen 44 auf, an dem Laschen 42 angeformt sind, die in etwa eine u-förmige Gestalt haben, wobei ein Schenkel parallel zum horizontalen Kragen 44 verläuft und mit diesem fest verbunden ist, sowie einen oberen, parallel dazu verlaufenden Schenkel 422. Der obere, parallele Schenkel 422 dient zur Auflage des Rostes 6, der hier nicht dargstellt ist. Der die beiden Schenkel 421 und 422 verbindende Anlageschenkel 423 verläuft geneigt in der Richtung parallel zur Innenwand 424 des Unterteiles 4 in jenem Bereich in dem die Lasche 42 dem erwähnten Anlageschenkel 423 anliegt. Des weiteren erkennt man die Mittel 10 zur Führung der Wärme. Im Prinzip sind diese Mittel in Form von Öffnungen 41 im Leitkonus lediglich ansatzweise bei den obersten seitlich angeordneten Bereichen erkennbar. Die Öffnungen 41 werden nämlich in der Ansicht von der Seite, wie hier dargestellt, in der Sicht verdeckt durch Luftleitkappen 43. In den Figuren 5 und 6 ist der Wärmeleitkonus 4 für sich allein einmal in der Seitenansicht (Figur 5) und einmal in perspektivischer Ansicht schräg von oben (Figur 6) dargestellt. In dieser Figur sind die Laschen 42 nicht gezeichnet. Hingegen erkennt man im horizontalen Kragen 44 drei Befestigungslöcher 46 mittels denen die Laschen 42 beispielsweise mittels einer Nut befestigbar sind. Um eine gesicherte Dreipunktauflage zu erreichen, sind nur drei Laschen 42 vorhanden. Man erkennt ferner in der Figur 6, dass der horizontale Kragen 44 eine Unterbrechung 45 hat. Hierauf wird später noch eingegangen. In der Figur 6 sind auch die Öffnungen 41 teilweise ersichtlich, doch sieht man hier auch die Innenseite der Luftleitkappen 43, je nach Blickwinkel mehr oder weniger deutlich.

Die durch die Flammen des Gasbrenners 3 bewirkte Hitze steigt im Wesentlichen an der Aussenseite des Wärmeleitkonuses 4 nach oben. Die Strömung der erhitzten Luft wird nun durch die Luftleitkappen 43 umgelenkt und gelangen so durch die erwähnten Öffnungen 41 in den Innenraum des Wärmeleitkonuses 4. Die Luftleitkappen 43 können wie hier dargestellt aus sichelförmigen Blechteilen gestaltet sein, die lediglich entlang des oberen Randes 47 aussen aufgeschweisst sind. Diese Luftleitkappen 43 können so grösser gestaltet sein als die eigentlichen Öffnungen 41. Es ist jedoch auch möglich diese Luftleitkappen 43 so zu bilden, dass lediglich der untere Rand der Öffnung 41 gestanzt wird und der obere Rand 47 durch eine, aus dem Wärmeleitkonus 4 heraus geformten Bereich der Wand 424 gebildet wird.

Die Laschen 42 sind so gross gestaltet, dass der Abstand des horizontalen Kragens 44 zur Innenwand 424 des Unterteiles 2 überwunden wird und dabei noch ein genügender Spalt verbleibt um die erzeugte Hitze um den horizontalen Kragen 44 des Wärmeleitkonuses 4 herumführen zu können, ohne das dabei ein relevanter Hitzestau entsteht.

Im Wärmeleitkonus 4 ruht ein in der Figur 4 nur teilweise ersichtlicher Verstellkonus 7. Der Verstellkonus 7 ist bezüglich seiner Konizität gleich gestaltet wie der Wärmeleitkonus 4. Entsprechend lässt sich der Verstellkonus 7 in den Wärmeleitkonus 4 hineinlegen, so dass dessen Aussenseite auf der Innenseite des Wärmeleitkonus 4 aufliegt. Der Verstellkonus 7 kann in seiner Bauhöhe etwa gleichhoch sein wie der Wärmeleitkonus 4. Bevorzugerweise ist er jedoch etwas höher, so dass im eingelegten Zustand der Verstellkonus 7 unten geringfügig aus dem Wärmeleitkonus 4 herausragt, wie dies die Figur 4 zeigt. Prinzipiell könnte aber der Verstellkonus auch eine geringere Höhe haben als der Wärmeleitkonus. Auch der Verstellkonus 7 besitzt Mittel 10 zur Führung der Wärme vom Gasbrenner 3 durch den Wärmeleitkonus 4. Auch hier sind diese Mittel 10 als Öffnungen gestaltet, die hier mit 71 bezeichnet sind. Diese Öffnungen 71 sind in der Grösse, in der Anordnung und Lage sowie der Form mindestens annähernd gleich gestaltet wie die entsprechenden Öffnungen 41 im Wärmeleitkonus. An jedem oberen Rand der Öffnungen 71 sind Tropfenabweiser 73 angeformt, wobei diese im Gegensatz zum Wärmeleitkonus 4 hier auf der inneren Wandfläche angeformt sind. Wie der Name sagt, dienen die Tropfenabweiser 73 dazu, insbesondere Fetttropfen, die vom Grillgut, welches auf dem Rost 6 gegrillt werden soll und auf die Wand des Verstellkonus 7 gelangen, um die Öffnungen 71 herum zu leiten, so dass diese im geschlossenen Zustand nicht zwischen dem Wärmeleitkonus 4 und der Aussenseite des Verstellkonus 7 beziehungsweise im offenen Zustand nicht durch die Öffnungen 71 im Verstellkonus und den mehr oder weniger deckungsgleich darunter liegenden Öffnungen 41 im Wärmeleitkonus hindurch auch die innere Wand des Unterteiles tropfen können. Vielmehr gelangt dieses abtropfende Fett durch die untere zentrale Öffnung 74 im Verstellkonus 7 hindurch in den Unterteil 2 und fliesst schliesslich ab in eine Tropfenwanne 9. Der maximale Durchmesser der zentralen Öffnung 5 im Wärmeleitkonus 4 oder die zentrale Öffnung 74 im Verstellkonus 7 weisen einen maximalen Durchmesser auf, der kleiner ist als der Innendruchmesser des Gasbrenners 3, so dass sichergestellt ist, dass das abtropfende Fett nicht auf den Gasbrenner gelangt.

Am Verstellkonus 7 ist eine Grifflasche 72 angeformt. Diese Grifffalsche führt vom Verstellkonus 7 über den Abstand des Verstellkonus zur Wand des Unterteiles 2 in etwa der Wandung entlang nach oben und praktisch formschlüssig über den Rand 200 bogenförmig hinweg nach aussen. Zu Äusserst ist an der Grifflasche 72 ein Griff 75, bevorzugterweise aus isolierendem Material, aufgesetzt.

Mittels der Grifflasche 72, welche auch im geschlossenen Zustand der Grillvorrichtung 1 bedienbar ist, da sie zwischen Unterteil 2 und dem Deckel 8 hindurchgeführt ist, lässt sich der Verstellkonus 7 im Wärmeleitkonus 4 verdrehen. Je nach der Relativlage vom Wärmeleitkonus und Verstellkonus sind die Öffnungen 41 im Wärmeleitkonus und die Öffnungen 71 im Verstellkonus mehr oder weniger deckungsgleich übereinander. Hierbei ist der Verstellbereich so gewählt, dass im Verstellendbereich auf der einen Seite die Öffnungen 41 und 71 überhaupt nicht überlappen und somit die aufsteigende Wärme vom Gasbrenner 3 vollständig um den Wärmeleitkonus herumgeführt wird. Hierbei steigt die Wärme im Bereich zwischen dem Wärmeleitkonus und der Innenwand 424 des Unterteiles 2 hoch um den horizontalen Kragen 44 herum und gelangt in den Raum der vom Deckel 8 begrenzt wird, so dass nun ein auf dem Rost 6 liegendes Grillgut vorwiegend Oberhitze erhält. Greift man den Griff 75 und verschiebt man mittels der Grifflasche 72 den Verstellkonus 7 bis in den anderen Endbereich, so gelangen nun die Öffnungen 41 im Wärmeleitkonus in die Öffnungen 71 im Verstellkonus zur vollständig überlappenden Lage mit dem maximalen Wärmedurchgang durch den Wärmeleitkonus. Die aufsteigende Hitze wird durch die Luftleitkappen 43 optimal durch die erwähnten Öffnungen geführt und entsprechend gelangt nun die aufsteigende Wärme vorwiegend in den Innenbereich des Wärmeleitkonuses beziehungsweise des Verstellkonuses und gelangt so direkt auf die Unterseite eines auf dem Rost 6 aufgebrachten Grillgutes. In diesem Falle gelangt vorwiegend Unterhitze auf das Grillgut. Durch die Verstellung mittels der Grifflasche 72 lassen sich selbstverständlich beliebige Zwischenstellungen erzielen. Da wie bereits erwähnt die Grifflasche 72 zwischen Unterteil und Deckel hindurchgeführt ist, kann nun diese Verstellung auch erfolgen ohne dass man hierzu den Deckel 7 anheben muss. Der Verstellbereich wird vorgegeben durch die Unterbrechung 45 beim horizontalen Kragen 44 des Wärmeleitkonus 4. Liegt die Grifflasche 72 an dem Begrenzungsrand der Unterbrechung 45 an, so ist die eine definierte Endlage erreicht, verschiebt man die Grifflasche und damit den Verstellkonus 7 bis die Grifflasche am anderen Ende der Unterbrechung 45 anliegt, so ist die andere zuvor beschriebene Endlage erreicht. Damit dies möglich ist, muss sichergestellt werden, dass die Grifflasche 72 auch nicht am Rost ansteht, ist auch der Rost 6 mit einer entsprechenden Ausnehmung 61 versehen.

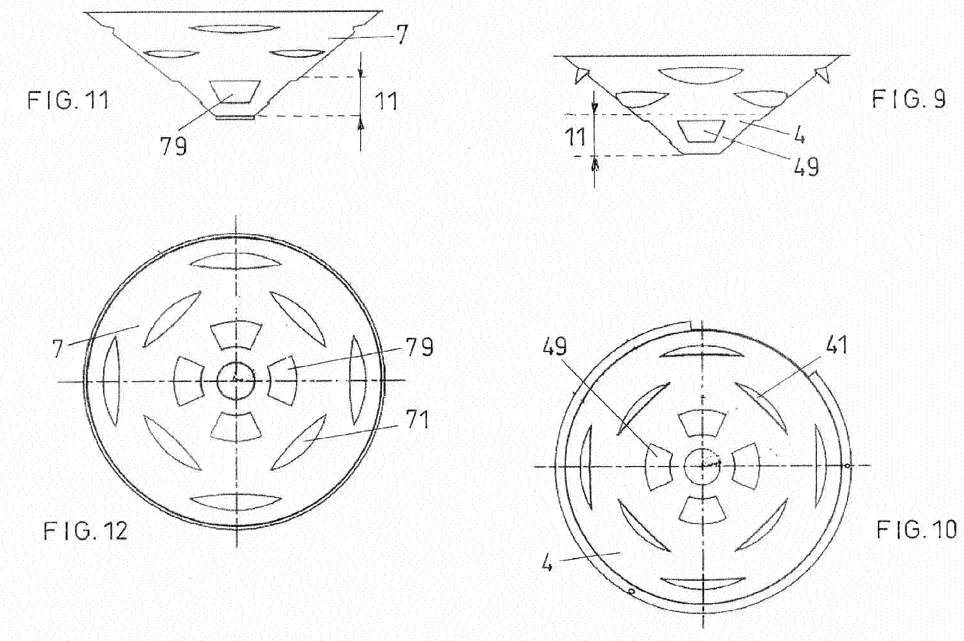

Letztlich sei noch darauf hingewiesen, dass es möglich ist, sowohl den Wärmeleitkonus 4 als auch den Verstellkonus 7 so lang zu gestalten, dass deren unteres Ende durch den ringförmigen Gasbrenner 3 hindurch greifen kann. Diese Variante ist in den Figuren 9-12 dargestellt. Die Figuren 9 und 10 zeigen diese alternaive Ausgestaltung des Wärmeleitkonuses 4 und die Figuren 11 und 12 die dazu passende Ausführungsform des Verstellkonuses 7. Diese Variante birgt jedoch die Gefahr eines Hitzestaues. Dieser Hitzestau lässt sich aber vermeiden, indem in den unteren Enden beider Konen 4, 7 im untersten Bereich entweder Schlitze oder wie hier dargestellt, schlitzförmige Fenster als zusätzliche Mittel 10 zur Führung der Wärme angebracht sind. Diese zusätzlichen Mittel 10 zur Führung der Wärme sind im untersten Bereich 11 der beiden Konen 7 und 10 angebracht. Diese Mittel sind als rechteckige oder schlitzförmige Fensteröffnungen gestaltet. Die Fensteröffnungen im Wärmeleitkonus 4 sind mit 49 bezeichnet, jene im Verstellkonus mit 79.

Die Grösse der Fensteröffnungen 49, 79 sind auch so gewählt, dass im Bereich der möglichen relativen Verdrehung der beiden Konen zu einander, diese Fensteröffnungen von der vollständig geschlossenen Lage, bei der keine Überlappung der Fensteröffnungen 49 und 79 in den beiden Konen vorhanden ist bis zur vollständigen offenen Lage, bei der die Fensteröffnungen 49, 79 praktisch deckungsgleich übereinander liegen. Auch jede Zwischenlage ist möglich.

Im Gegensatz zu den bereits beschriebenen Öffnungen 41 und 71, die mit Luftleitkappen 43 und Tropfenabweiser 73 versehen sind, sind an den Mitteln 10 im Bereich 11 solche Luftleitkappen oder Tropfenabweiser hier nicht erforderlich.

Es sei noch vermerkt, dass hier unter einem ringförmigen Gasbrenner keineswegs zwingend eine kreisförmige Anordnung zu verstehen ist. Vielmehr wird hier ein Gasbrenner verstanden, der in beliebiger Form um die zentrische Öffnung 5 des Wärmeleit- und/oder Verstellkonus herum angeordneter Brenner ist.

### Bezugszeichenliste:

- 1: Grillvorrichtung
- 2: Unterteil
- 21: Rand des Unterteils
- 3: Gasbrenner
- 4: Wärmeleitkonus
- 5: zentrische Öffnung
- 6: Rost
- 7: Verstellkonus
- 8: Deckel
- 9: Tropfenwanne
- 10: Mittel zur Führung der Wärme
- 11: unterster Bereich des Wärme- und Verstellkonus

- 20: mobiler Untersatz
- 21: Rahmenkonstruktion
- 22: Beine
- 23: Schwenkbare Rollen
- 24: Arretiermittel
- 25: Auflage
- 26: Frontplatte
- 27: Boden
- 28: vertiefte Wanne
- 29: Frontabdeckung
- 30: Regulierknopf
- 200: oberer Rand
- 201: Umstülpung

- 41: Öffnung im Wärmeleitkonus
- 42: Laschen am Wärmeleitkonus
- 43: Luftleitkappen
- 44: horizontaler Kragen
- 45: Unterbrechung
- 46: Befestigungslöcher
- 47: oberer Rand der Öffnung 41
- 48: unterer Rand der Öffnung 41
- 49: Fensteröffnung im Wärmeleitkonus

- 421: Schenkel parallel zu 4
- 422: Schenkel
- 423: Anlageschenkel
- 424: Innenwand des Unterteiles

- 61: Ausnehmung am Rost
- 71: Öffnung am Verstellkonus
- 72: Grifflasche
- 73: Tropfenabweiser
- 79: Fensteröffnung im Verstellkonus

## Patentansprüche

1. Schliessbare Grillvorrichtung (1) umfassend einen Unterteil (2) und einen darin angeordneten ringförmigen Gasbrenner (3) und einen im Unterteil (2) oberhalb des Gasbrenners (3) und distanziert von der Wand des Unterteiles gehaltenen Wärmeleitkonus (4) mit einer zentrischen unteren Öffnung (5), welche kleiner ist als der innere Durchmesser des ringförmigen Gasbrenners (3), sowie einen im Unterteil (2) über dem Wärmeleitkonus gehaltenen Grillrost (6), sowie einen schwenkbaren oder abhebbaren Deckel (8), **dadurch gekennzeichnet, dass** mehrere über den Umfang im Wärmeleitkonus (4) angeordnete Öffnungen (41) vorhanden sind, und ein Verstellkonus (7) mit Öffnungen (71) im Wärmeleitkonus (4) gleitend und aufliegend lagert, wobei der Verstellkonus (7) verdrehbar zum Wärmeleitkonus ist, so dass je nach der relativen verdrehten Lage des Verstellkonus (7) zum Wärmeleitkonus (4) die Öffnungen (41, 71) in den beiden Koni (4, 7) mehr oder weniger von vollständig geschlossen bis vollständig deckungsgleich übereinander liegend verstellbar sind, wodurch die Wärme des Gasbrenners (3) variabel verstellbar durch die Öffnungen (41, 71) des Wärmeleitkonus (4) und den Verstellkonus (7) hindurch oder um diese herum führbar ist, so dass bei Führung der Wärme durch den Wärmeleitkonus (4) hindurch überwiegend Unterhitze und bei Führung der Wärme um den Wärmeleitkonus (4) herum überwiegend Oberhitze auf ein auf dem Grillrost liegendes Grillgut führbar ist.

2. Grillvorrichtung (1) nach Anspruch 1, **dadurch gekennzeichnet dass** der Unterteil (2) eine rotationssymmetrische Form hat und am Wärmeleitkonus (4) mehrere Laschen (42) angeformt sind, die auf dem Unterteil (2) aufliegen.

3. Grillvorrichtung (1) nach Anspruch 1, **dadurch gekennzeichnet dass** am Verstellkonus (7) eine Grifflasche (72) angeformt ist, die den oberen Rand (21) des Unterteils (2) umgreift und zwischen Unterteil (2) und Deckel (8) nach aussen geführt ist.

4. Grillvorrichtung (1) nach Anspruch 1, **dadurch gekennzeichnet dass** am Verstellkonus (7) oberhalb der Öffnungen (71) zum Zentrum des Konus hin gerichtete Tropfenabweiser (73) angeformt sind.

5. Grillvorrichtung (1) nach Anspruch 1, **dadurch gekennzeichnet dass** die Öffnungen (71) im Verstellkonus (7) sichelförmig gestanzt sind und die Tropfenabweiser (73) durch zum Zentrum des Konus hin gebogene Teile der sichelförmigen Ausstanzung sind.

6. Grillvorrichtung (1) nach Anspruch 1, **dadurch gekennzeichnet dass** der Wärmeleitkonus (4) sichelförmige gestanzte Öffnungen (41) aufweist, an deren oberen Rand vom Zentrum des Wärmeleitkonus wegweisende Luftleitkappen (43) angeformt sind, die die aufsteigende heisse Luft durch den Wärmeleitkonus hindurch nach innen lenken.

7. Grillvorrichtung (1) nach Anspruch 6, **dadurch gekennzeichnet, dass** die Luftleitkappen (43) vom Zentrum des Wärmeleitkonus (4) nach aussen gebogene Teile der Ausstanzungen sind.

8. Grillvorrichtung (1) nach Anspruch 1, **dadurch gekennzeichnet, dass** der Wärmeleitkonus am oberen Rand einen horizontal abstehenden Kragen (44) aufweist.

9. Grillvorrichtung (1) nach Anspruch 8, **dadurch gekennzeichnet dass** der abstehende Kragen (44) des Wärmeleitkonus (4) eine Unterbrechung (45) aufweist, dessen Länge den Verstellweg des Verstellkonus (7) definiert.

10. Grillvorrichtung (1) nach Anspruch 9, **dadurch gekennzeichnet dass** die Länge der Unterbrechung (45) mindestens annähernd die maximale Ausdehnung der Öffnungen (41, 71) in Richtung des Verstellweges entspricht.

11. Grillvorrichtung (1) nach einem der Ansprüche 3 oder 9, **dadurch gekennzeichnet, dass** die Grifflasche (72) den Wärmeleitkonus (4) im Bereich der Unterbrechung (45) übergreift.

12. Grillvorrichtung (1) nach Anspruch 1, **dadurch gekennzeichnet, dass** zusätzlich zu den Öffnungen (41, 71) in den Konen (4,7), in deren untersten Bereich (11) schlitzförmige Fensteröffnungen (49, 79) eingeformt sind.

## Claims

1. A closable grilling apparatus (1), comprising a lower part (2) with an annular gas burner (3) arranged therein, a heat conducting cone (4), which is held in the lower part (2) above the gas burner (3) such that it is spaced apart from the wall of the lower part and features a central bottom opening (5) that is smaller than the inside diameter of the annular gas burner (3), as well as a cooking grate (6) that is held in the lower part (2) above the heat conducting cone and a hinged or removable cover (8), **characterized in that** several openings (41) are arranged in the heat conducting cone (4) over the circumference thereof, and **in that** an adjustment cone (7) with openings (71) is supported in the heat conducting cone (4) in a sliding and contacting fashion, wherein the adjustment cone (7) can be turned relative to the heat conducting cone such that the openings (41, 71) in the two cones (4, 7) can be more or less adjusted between a completely closed position and a position, in which they lie on top of one another in a completely congruent fashion, depending on the relative rotation of the adjustment cone (7) to the heat conducting cone (4), and wherein the heat of the gas burner (3) can thereby be conducted through the openings (41, 71) of the heat conducting cone (4) and the adjustment cone (7) or around these cones in a variably adjustable fashion such that food to be grilled lying on the cooking grate can be predominately subjected to bottom heat by conducting the heat through the heat conducting cone (4) and predominantly subjected to top heat by conducting the heat around the heat conducting cone (4) .

2. The grilling apparatus (1) according to claim 1, **characterized in that** the lower part (2) has a rotationally symmetrical shape and several brackets (42) are integrally formed on the heat conducting cone (4) and rest on the lower part (2).

3. The grilling apparatus (1) according to claim 1, **characterized in that** a handle bracket (72) is integrally formed on the adjustment cone (7) and encompasses the upper edge (21) of the lower part (2), wherein said handle bracket extends outward between the lower part (2) and the cover (8).

4. The grilling apparatus (1) according to claim 1, **characterized in that** drip deflectors (73) are integrally formed on the adjustment cone (7) above the openings (71) and directed toward the center of the cone.

5. The grilling apparatus (1) according to claim 1, **characterized in that** the openings (71) in the adjustment cone (7) are punched in a crescent-shaped fashion and the drip deflectors (73) consist of parts of the respective crescent-shaped punchings that are bent toward the center of the cone.

6. The grilling apparatus (1) according to claim 1, **characterized in that** the heat conducting cone (4) features crescent-shaped punched openings (41), on the upper edge of which air deflecting caps (43) are integrally formed, wherein said air deflecting caps are directed away from the center of the heat conducting cone and deflect the ascending hot air inward through the heat conducting cone.

7. The grilling apparatus (1) according to claim 6, **characterized in that** the air deflecting caps (43) consist of parts of the respective punchings that are bent outward from the center of the heat conducting cone (4) .

8. The grilling apparatus (1) according to claim 1, **characterized in that** the heat conducting cone features a horizontally protruding collar (44) on its upper edge.

9. The grilling apparatus (1) according to claim 8, **characterized in that** the protruding collar (44) of the heat conducting cone (4) features an interruption (45), the length of which defines the adjusting range of the adjustment cone (7).

10. The grilling apparatus (1) according to claim 9, **characterized in that** the length of the interruption (45) corresponds at least approximately to the maximum size of the openings (41, 71) in the adjusting direction.

11. The grilling apparatus (1) according to one of claims 3 or 9, **characterized in that** the handle bracket (72) overlaps the heat conducting cone (4) in the region of the interruption (45).

12. The grilling apparatus (1) according to claim 1, **characterized in that** slot-shaped window openings (49, 79) are provided in the cones (4, 7) in their lowermost region (11) in addition to the openings (41, 71).

## Revendications

1. Barbecue (1) refermable comprenant une partie inférieure (2) et un brûleur à gaz (3) de forme annulaire placé dans celle-ci et un cône conducteur de chaleur (4) maintenu dans la partie inférieure (2), au-dessus du brûleur à gaz (3) et à distance de la paroi de la partie inférieure, doté d'un orifice (5) inférieur central, lequel est inférieur au diamètre intérieur du brûleur à gaz (3) de forme annulaire, ainsi qu'une grille (6) maintenue dans la partie inférieure (2), au-dessus du cône conducteur de chaleur, ainsi qu'un couvercle (8) susceptible de pivoter ou d'être retiré, **caractérisé en ce que** plusieurs orifices (41) placés sur la périphérie dans le cône conducteur de chaleur (4) sont présents et un cône de réglage (7) avec des orifices (71) est logé en appui et de manière coulissante dans le cône conducteur de chaleur (4), le cône de réglage (7) étant susceptible de tourner par rapport au cône conducteur de chaleur, de telle sorte qu'en fonction de la position tournée relative du cône de réglage (7) par rapport au cône conducteur de chaleur (4), les orifices (41, 71) dans les deux cônes (4, 7) soient plus ou moins ajustables, d'une position entièrement fermée à une superposition en recouvrement total, suite à quoi la chaleur du brûleur à gaz (3) peut être guidée par un réglage variable à travers les orifices (41, 71) du cône conducteur de chaleur (4) et le cône de réglage (7) ou autour de ces derniers, de sorte que lors du guidage de la chaleur à travers le cône conducteur de chaleur (4), majoritairement de la chaleur inférieure et lors du guidage de la chaleur autour du cône conducteur de chaleur (4), majoritairement de la chaleur supérieure puisse être guidée sur un produit à griller reposant sur la grille.

2. Barbecue (1) selon la revendication 1, **caractérisé en ce que** la partie inférieure (2) a une forme symétrique en rotation et sur le cône conducteur de chaleur (4) sont surmoulées plusieurs pattes (42) qui reposent sur la partie inférieure (2).

3. Barbecue (1) selon la revendication 1, caractérisé e, ce que sur le cône de réglage (7) est surmoulée une patte de préhension (72) qui entoure le bord supérieur (21) de la partie inférieure (2) et qui est guidée vers l'extérieur, entre la partie inférieure (2) et le couvercle (8).

4. Barbecue (1) selon la revendication 1, **caractérisé en ce que** sur le cône de réglage (7), au-dessus des orifices (71) sont surmoulés des happe-gouttes (73) dirigés vers le centre du cône.

5. Barbecue (1) selon la revendication 1, **caractérisé en ce que** les orifices (71) dans le cône de réglage (7) sont découpés en forme de faucille et les happe-gouttes (73) sont des parties recourbées vers le centre du cône de la découpe en forme de faucille.

6. Barbecue (1) selon la revendication 1, **caractérisé en ce que** le cône conducteur de chaleur (4) comporte de orifices (41) découpés en forme de faucilles, sur le bord supérieur desquels sont surmoulés des capuchons conducteurs d'air (43) s'éloignant du centre du cône conducteur de chaleur, qui dirigent l'air chaud ascendant à travers le cône conducteur de chaleur vers l'intérieur.

7. Barbecue (1) selon la revendication 6, **caractérisé en ce que** les capuchons conducteurs d'air (43) sont des parties des découpes recourbées du centre du cône conducteur de chaleur (4) vers l'extérieur.

8. Barbecue (1) selon la revendication 1, **caractérisé en ce que** sur le bord supérieur, le cône conducteur de chaleur comporte un collet (44) débordant à l'horizontale.

9. Barbecue (1) selon la revendication 8, **caractérisé en ce que** le collet (44) débordant du cône conducteur de chaleur (4) comporte une interruption (45) dont la longueur définit la course de réglage du cône de réglage (7).

10. Barbecue (1) selon la revendication 9, **caractérisé en ce que** la longueur de l'interruption (45) correspond au moins approximativement à l'extension maximale des orifices (41, 71) dans la direction de la course de réglage.

11. Barbecue (1) selon l'une quelconque des revendications 3 ou 9, **caractérisé en ce que** la patte de préhension (72) chevauche le cône conducteur de chaleur (4) dans la zone de l'interruption (45).

12. Barbecue (1) selon la revendication 1, **caractérisé en ce qu'**en supplément des orifices (41, 71), dans les cônes (4, 7), dans leur zone inférieure extrême (11) sont ménagés des orifices de regard (49, 79) en forme de fentes.
